# EUROPÄISCHE PATENTSCHRIFT

(11) **EP 2 914 470 B1**
(45) Veröffentlichungstag und Bekanntmachung des Hinweises auf die Patenterteilung: **20.01.2021**
(21) Anmeldenummer: 13777262.0
(22) Anmeldetag: 11.10.2013
(51) Int. Cl.: B61C 9/48, H02K 11/00

(54) **ANTRIEBSSTRANG MIT EINER GETRIEBEBAUEINHEIT**
DRIVE TRAIN WITH A TRANSMISSION UNIT
CHAÎNE CINÉMATIQUE DOTÉE D'UNE UNITÉ DE TRANSMISSION

(30) Priorität: 30.10.2012 DE 102012219819
(43) Veröffentlichungstag der Anmeldung: 09.09.2015
(73) Patentinhaber: Voith Patent GmbH, 89522 Heidenheim (DE)
(72) Erfinder: HOLZAPFEL, Michael, 89522 Heidenheim (DE); HILLMANN, Roland, 89129 Langenau (DE); LUQUE-ALEMAN, Enrique, 89601 Schelklingen (DE)
(74) Vertreter: Voith Patent GmbH - Patentabteilung
(86) Internationale Anmeldenummer: PCT/EP2013/071268
(87) Internationale Veröffentlichungsnummer: WO 2014/067764

(56) Entgegenhaltungen:
- EP-A1- 0 271 678
- WO-A1-2004/038241
- WO-A1-2011/148642
- WO-A2-2012/084576
- DE-A1-102005 012 656
- US-A1- 2005 285 464

## Beschreibung

Die Erfindung betrifft einen Antriebsstrang für ein Schienenfahrzeug, zum Antrieb einer mit zumindest einem Antriebsrad gekoppelten Radantriebswelle oder Radsatzwelle mit einem Fahrwerkrahmen oder Drehgestell, an welchem die Antriebsräder gelagert sind und zumindest einer elektrischen Antriebsmaschine und einer Getriebebaueinheit, die im Antriebsleistungsfluss zwischen der Antriebsmaschine und den Antriebsrädern angeordnet ist. Zwischen dem Fahrwerkrahmen oder Drehgestell und der Radantriebs- oder Radsatzwelle ist eine Erdungseinrichtung vorgesehen. Durch diese erfolgt ein Schließen des Stromkreises durch die Rückführung über Drehgestell- oder Fahrwerkrahmen, die an diesem gelagerte Radantriebs- bzw. Radsatzwelle, das Rad auf die Schiene.

Die Ankopplung des Rotors einer elektrischen Antriebsmaschine an die Eingangswelle erfolgt antriebseitig über eine Kupplungseinrichtung, beispielsweise eine drehsteife und radialsteife Membrankupplung oder eine Bogenzahnkupplung oder eine kardanische Kupplung. In Abhängigkeit der Ausbildung der Lagerung der Rotorwelle im Gehäuse der elektrischen Antriebsmaschine - einseitig oder beidseitig - erfolgt die Abstützung der Rotorwelle somit entweder über die Lageranordnung der Eingangswelle in der Getriebebaueinheit oder im Gehäuse der Antriebsmaschine. Die Getriebebaueinheit selbst ist meist einstufig oder zweistufig ausgeführt. Diese kann achsreitend, d.h. auf der Radsatzwelle gelagert oder am Drehgestell oder Fahrwerkrahmen gelagert sein.

Die aufgrund frequenzveränderlicher Steuerungen an der elektrischen Antriebsmaschine induzierten elektrischen Spannungen bedingen jedoch Ströme, die über die Rotorwelle und bei Ausführung der Kupplung zwischen Rotorwelle und Eingangswelle als Metallkupplung in die Lageranordnung der Getriebebaueinheit eingetragen werden. Diese Ströme führen zu Funkenerosion, die Schmelzkrater, ein Fressen und Profilierung der Lagerlaufflächen und damit ernsthafte Lagerschäden zur Folge haben. Zur Vermeidung wurde daher eine Antriebseinheit vorgeschlagen, welche an der von der elektrischen Antriebsmaschine abgewandten Seite der Getriebebaueinheit im Bereich der zweiten Lageranordnung der Eingangswelle in der Getriebebaueinheit eine Erdungseinrichtung vorsieht, umfassend einen, die Eingangswelle oder ein drehfest mit dieser verbundenes Bauteil in Umfangsrichtung umschließenden und mit dem Gehäuse verbundenen Erdungsring. Die Anordnung des Erdungsringes und dessen Lagefixierung am Getriebegehäuse bedingt jedoch eine gegenüber Ausführungen frei von einer derartigen Erdungseinrichtung komplexere Gestaltung des Gehäusedeckels auf der von der elektrischen Antriebsmaschine abgewandten Getriebeseite, insbesondere in Form eines Labyrinthdeckels. Es hat sich jedoch gezeigt, dass trotz dieser Erdungsanordnung die Lageranordnungen der Eingangswelle nur unzureichend von den vorgenannten Schäden schützbar sind und Lagerschäden nicht in ausreichender Weise eliminierbar sind.

Im Stand der Technik ist beispielsweise aus dem Dokument WO 2012/084576 A2 bekannt, eine elektrische Maschine eines Schienenfahrzeugs mit einer Erdungseinrichtung zu versehen. Als vorteilhaft wird hier eine Erdungseinrichtung mit einer Kapazität mit einem Mindest-Kapazitätswert und einem Widerstand offenbart Eine Getriebebaueinheit, geeignet zur Kopplung mit einer elektrischen Antriebsmaschine unter Ausbildung einer Antriebseinheit ist aus dem Dokument WO 2004/038241 A1 bekannt.

Die Problematik der Schädigung von Lageranordnungen einer Rotorwelle im Gehäuse einer elektrischen Antriebsmaschine ist allgemein aus dem Firmenprospekt Morgan Rekofa GmbH: "MorganAM&T Aegis SGR™ Wellenerdungssystem", vorbekannt. In diesem wird zur Vermeidung ein Lagerschutz vorgeschlagen, der durch auf die Rotorwelle aufschiebbare Erdungsringe charakterisiert ist. Dabei erfolgt die Anordnung zumindest auf der Antriebseite der elektrischen Antriebsmaschine am Gehäuse der elektrischen Maschine und schützt somit die mit der Rotorwelle gekoppelten Baueinheiten vor den schädlichen Strömen.

Der Erfindung liegt die Aufgabe zugrunde, in Getriebebaueinheiten in Antriebsträngen, insbesondere von Schienenfahrzeugen, die Lagerschäden, bedingt durch unerwünschten Stromfluss über diese, mit Sicherheit auszuschließen.

Die erfindungsgemäße Lösung ist durch die Merkmale des Anspruchs 1 charakterisiert. Vorteilhafte Weiterentwicklungen sind jeweils in den Unteransprüchen wiedergegeben.

Ein Antriebsstrang mit einer Getriebebaueinheit, geeignet zur Kopplung mit einer elektrischen Antriebsmaschine unter Ausbildung einer Antriebseinheit mit einem Getriebegehäuse, einer im Getriebegehäuse über wenigstens eine Lageranordnung gelagerten und mit einer elektrischen Antriebsmaschine koppelbaren Eingangswelle und zumindest einem Abtrieb, und einer der Eingangswelle zugeordneten und wenigstens mittelbar mit dem Getriebegehäuse verbundenen Erdungseinrichtung zur Übertragung von Strömen zwischen der Eingangswelle und dem Getriebegehäuse, ist erfindungsgemäß dadurch gekennzeichnet, dass die Erdungseinrichtung auf der Eingangsseite der Eingangswelle in das Getriebegehäuse in Kraftflussrichtung von der Antriebsmaschine zum Abtrieb der Getriebebaueinheit betrachtet vor der ersten Lageranordnung angeordnet ist und am Getriebegehäuse Mittel zum Anschluss einer Einrichtung zur elektrischen Kopplung mit einem beabstandet angeordneten Anschlussbereich.

"Wenigstens mittelbar verbunden" bedeutet, dass die Kopplung beziehungsweise Verbindung zwischen zwei Bauteilen entweder direkt zwischen diesen oder indirekt, beispielsweise durch Verbindung über weitere zwischengeordnete Bauteile erfolgen kann.

Die Eingangsseite der Eingangswelle in das Getriebegehäuse ist die Seite der Getriebebaueinheit, auf welcher bei Kopplung mit einer Antriebsmaschine das von dieser abgegebene Drehmoment eingeleitet wird.

Der Begriff "Welle" ist funktional zu verstehen. Dieser umfasst alle drehbar um eine Achse gelagerten Bauteile. Wellen liegen vorzugsweise als Hohl- oder Vollwelle vor.

Unter einer Erdungseinrichtung wird allgemein eine Einrichtung verstanden, welche eine elektrisch leitende Verbindung zwischen zwei Bauteilen und damit eine Strombrücke gewährleistet. Insbesondere bildet eine Erdungseinrichtung einen Erdungskontakt zwischen einem ruhenden Teil und einem bewegbaren Teil.

Elektrisch gekoppelt im Sinne der Erfindung bedeutet insbesondere das Vorsehen einer elektrisch leitfähigen Verbindung zwischen Komponenten mit unterschiedlichem elektrischen Potential gegenüber einem beiden gemeinsam zugeordneten Bezugspunkt zum Ausgleich des zwischen diesen vorgesehenen Potentialunterschiedes. Die Kopplung kann durch ein Übertragungsmedium wie einen Metalldraht oder Leiter mit der anderen Komponente erfolgen.

Unter einem Schienenfahrzeug wird ein Fahrzeug verstanden, welches zum Fahren auf einer oder mehreren Schienen geeignet ist, wie beispielsweise ein Triebwagen, eine Lokomotive, eine Straßenbahn, eine Untergrundbahn.

Die erfindungsgemäße Verlagerung der Erdungseinrichtung zur Eingangsseite der Getriebebaueinheit bietet den Vorteil, dass bereits die in Kraftflussrichtung erste Lageranordnung der Eingangswelle im Getriebegehäuse vor den schädlichen Strömen durch Ableitung vor dieser über das Getriebegehäuse geschützt wird. Die durch die Betriebsweise der elektrischen Antriebsmaschine erzeugten schädlichen Ströme werden somit gar nicht erst in die Getriebebaueinheit eingetragen sondern bereits vor der ersten Lageranordnung in das Gehäuse abgeleitet. Um die Ströme vom Getriebegehäuse ableiten zu können, sind diesem Mittel zum Anschluss einer Einrichtung zur elektrischen Kopplung mit einem beabstandet zu diesem angeordneten Anschlussbereich, beispielsweise an einem Bauteil vorgesehen. Bei der Einrichtung zur elektrischen Kopplung handelt es sich um eine Einrichtung, welche derart ausgeführt und angeordnet ist, geeignet zu sein, einen Strom vom Getriebegehäuse abzuleiten, insbesondere in einen Anschlussbereich an einer Fläche beziehungsweise ein anderes zu diesem beabstandetes Bauteil einzuleiten. Die Einrichtung kann ein- oder mehrteilig, starr oder zumindest teilweise flexibel ausgeführt sein. Im einfachsten Fall wird hierzu eine elektrische Leitung verwendet. Die Mittel zum Anschluss einer derartigen Einrichtung können dabei in integraler Bauweise mit dem Getriebegehäuse ausgeführt sein oder aber an diesem derart angeordnet und ausgeführt, geeignet zu sein, mit der Einrichtung zur elektrischen Kopplung unter Aufbau einer leitfähigen Verbindung mit einem anderen, zum Getriebegehäuse beabstandeten Anschlussbereich zusammenzuwirken.

Durch die Zuordnung der Erdungseinrichtung zur Getriebebaueinheit kann auf die Erdungsanordnung an der elektrischen Antriebsmaschine und damit eine Modifizierung dieser zur Anordnung einer Erdungseinrichtung verzichtet werden.

Die Erdungseinrichtung umfasst dazu zumindest ein Bauteil aus der nachfolgenden Gruppe:
- ein sich über wenigstens einen Teilbereich des Außenumfanges der Eingangswelle oder eines drehfest mit dieser verbundenen Bauteiles in Umfangsrichtung erstreckendes Erdungsringsegment, zur einfachen Montage und Demontage, beispielsweise ein sich bis zu 180° um den Außenumfang der Eingangswelle oder eines drehfest mit dieser verbundenen Bauteiles in Umfangsrichtung erstreckendes Erdungsringsegment;
- eine Erdungsringeinheit, gebildet aus einem in Umfangsrichtung geschlossenen ausgeführten Erdungsring oder zumindest zwei in Umfangsrichtung unter Ausbildung einer Trennfuge benachbart angeordneten Erdungsringsegmenten.

Im erstgenannten Fall ist durch den genannten Winkelbereich die Funktionsweise gewährleistet. Die Verwendung zumindest eines oder mehrerer Erdungsringsegmente bietet den Vorteil einer einfacheren Demontage dessen im Falle eines erforderlichen Austauschs ohne die Verbindung zwischen der Getriebebaueinheit und einer Antriebsmaschine aufheben zu müssen.

Die Verwendung einer Erdungsringeinheit bietet einen optimalen Schutz. Diese ist einfach zu montieren und koaxial zur Eingangswelle oder einem drehfest mit dieser verbundenen Bauteil angeordnet. In einer ersten Ausbildung ist die Erdungseinrichtung von zumindest einem in Umfangsrichtung geschlossen ausgeführten Erdungsring gebildet. Dies erlaubt eine einfache Montage an der Getriebebaueinheit.

In einer zweiten Ausbildung ist die Erdungseinrichtung aus zumindest zwei in Umfangsrichtung benachbart angeordneten Erdungsringsegmenten gebildet. Diese Lösung bietet den Vorteil, bei erforderlichem Austausch, insbesondere Demontage innerhalb einer Antriebseinheit nicht die gesamte Verbindung zwischen elektrischer Antriebsmaschine und Getriebebaueinheit lösen zu müssen und erlaubt ein Lösen der Verbindungen auch in einem begrenzten Zugangsbereich in Umfangsrichtung, indem die einzelnen Segmente in Umfangsrichtung gegenüber der Eingangswelle verdreht werden. Erdungsringsegment oder Erdungsring können als standardisierte Bauteile bezogen werden. Stellvertretend wird hinsichtlich möglicher Ausbildungen auf das Firmenprospekt Morgan Rekofa GmbH: "MorganAM&T Aegis SGR™ Wellenerdungssystem" und US 7,136,271 A verwiesen. Die Erdungsringsegmente oder Erdungsringe umfassen im Allgemeinen jeweils eine Bürstenanordnung und eine Halterung für die Bürstenanordnung, wobei die Dimensionierung im Hinblick auf den konkreten Einsatzfall derart erfolgt, dass immer ein ausreichender Kontakt der Bürsten mit dem stromführenden Bauteil, d.h. der Eingangswelle oder einem drehfest mit dieser verbundenen Bauteil gewährleistet ist.

In einer vorteilhaften Ausbildung ist die Getriebebaueinheit derart vormontiert, dass bereits ein Kupplungsteil, geeignet zur Kopplung mit dem Rotor der elektrischen Antriebsmaschine, wenigstens mittelbar drehfest mit der Eingangswelle verbunden ist. Die Erdungseinrichtung ist in axialer Richtung parallel zur Drehachse der Eingangswelle betrachtet zwischen Kupplungsteil und erster Lageranordnung angeordnet. Bei dieser Ausbildung kann ohnehin vorhandener Bauraum in axialer Richtung zwischen dem Kupplungsteil und Getriebegehäuse optimal für die Anordnung der Erdungseinrichtung genutzt werden.

Das Kupplungsteil kann beispielhaft als Kupplungsteil einer kardanischen Ganzmetallkupplung oder einer starren Membrankupplung ausgeführt sein.

Bezüglich der Ausführung einer wenigstens mittelbaren Verbindung der Erdungseinrichtung mit dem Getriebegehäuse besteht eine Vielzahl von Möglichkeiten. Dabei kann die Verbindung als Verbindung der Erdungseinrichtung mit zumindest einem Bauteil aus der nachfolgenden Gruppe oder einer Kombination aus diesen ausgeführt sein:
- einem Teilbereich der Wandung des Getriebegehäuses;
- einem Gehäusedeckel;
- einem mit dem Getriebegehäuse verbundenen Bauteil.

Im erstgenannten Fall einer Ausführung einer wenigstens mittelbaren Verbindung erfolgt die Anbindung der Erdungseinrichtung direkt an die Gehäusewandung des Getriebegehäuses. Diese Ausführung setzt eine in Abhängigkeit der Ausbildung des eingangsseitigen Verschlusses der Getriebebaueinheit entsprechende Erdungseinrichtung voraus, die es trotzdem noch erlaubt, die Eingangswelle mit der Bürstenanordnung auf wenigstens einem Teilbereich in Umfangsrichtung unter Kontaktierung zu umschließen. Insbesondere bei Getriebegehäuseausführungen mit Durchgangsöffnungen zur Durchführung der Eingangswelle durch in das Gehäuse eintauchende Getriebedeckel ist diese Ausführung für eine platzsparende Anordnung von Interesse.

Im zweiten Fall einer Ausführung einer wenigstens mittelbaren Verbindung ist lediglich der Gehäusedeckel zur Realisierung der Verbindung mit der Erdungseinrichtung zu modifizieren. Am Getriebegrundgehäuse sind keine konstruktiven Änderungen erforderlich. Dies gilt in Analogie auch für die dritte Ausführung.

Bei allen Ausführungen kann dabei die Verbindung mit dem zumindest einem Bauteil der vorgenannten Gruppe entweder direkt oder indirekt über eine Adaptereinrichtung erfolgen.

Die direkte Verbindung bedingt zwar eine Abstimmung zwischen Erdungseinrichtung und Anschlussumgebung am Getriebegehäuse, bietet aber den Vorteil einer besonders platzsparenden Bauweise. Die Anordnung der Erdungseinrichtung gegenüber dem Getriebegehäuse und damit Lagezuordnung ist hier als Funktion der Geometrie und Dimensionierung dieser sowie der Ausbildung der Verbindung im Einzelnen bestimmt.

Demgegenüber bietet die indirekte Verbindung über eine Adaptereinrichtung den Vorteil der freien Anpassbarkeit der Lagezuordnung von Erdungseinrichtung und Getriebegehäuse zueinander in Abhängigkeit von der Ausführung der Adaptereinrichtung. Ferner bietet die Adaptereinrichtung den Vorteil, auf standardisierte Gehäusedeckel beziehungsweise Anschlussbereiche am Getriebegehäuse zurückgreifen zu können, unabhängig von der Art der Anbindung der Erdungseinrichtung.

Die Verbindungen zwischen Erdungseinrichtung und Getriebegehäuse oder Adaptereinrichtung und/oder die Verbindung der Adaptereinrichtung mit dem Getriebegehäuse ist in einer Weiterentwicklung als eine Verbindung oder Kombination von Verbindungen aus folgender Gruppe ausgeführt:
- formschlüssige Verbindung
- kraftschlüssige Verbindung.

Die Auswahl der Verbindung erfolgt in Abhängigkeit der konkreten Anforderungen des Einzelfalls. Zur Realisierung der einzelnen Verbindungsarten sind an den betroffenen Anschlusselementen jeweils die entsprechenden Verbindungsmittel vorzusehen.

In einer besonders vorteilhaften Weiterentwicklung ist eine der vorgenannten Verbindungen zwischen Erdungseinrichtung und Getriebegehäuse oder Adaptereinrichtung und/oder die Verbindung der Adaptereinrichtung mit dem Getriebegehäuse derart ausgeführt, dass die Erdungseinrichtung und/oder die Adaptereinrichtung relativ zum Getriebegehäuse in axialer Richtung verstellbar, insbesondere verschiebbar ist. Diese Lösung bietet den Vorteil einer freien Einstellbarkeit der Lagezuordnung zwischen Getriebegehäuse und Erdungseinrichtung. Insbesondere können mit dieser Ausführung auch Anordnungen in Anschlussebenen erfolgen, die gegenüber der ersten Lageranordnung der Eingangswelle in Richtung Getriebeinnenraum versetzt angeordnet sind.

Um bei in Umfangsrichtung in Abständen erfolgender Befestigung der Erdungseinrichtung auch ein Lösen dieser über einen stark begrenzten Zugangsbereich in Umfangsrichtung betrachtet zu ermöglichen, ist gemäß einer weiteren vorteilhaften Weiterbildung der vorgenannten Verbindungen zweier Bauteile aus der Gruppe nachfolgend genannter Verbindungen
- Verbindung zwischen Getriebegehäuse und Adaptereinrichtung;
- Verbindung zwischen Adaptereinrichtung und Erdungseinrichtung;
- Verbindung zwischen Erdungseinrichtung und Getriebegehäuse
diese derart ausgeführt, geeignet zu sein, in einer ersten Funktionsstellung der beiden miteinander zu verbindenden Bauteile zueinander eine ortsfeste Lagezuordnung, insbesondere Verbindung zwischen diesen zu erzeugen und nach Lösen der ortsfesten Verbindung eine Relativbewegung der Adaptereinrichtung und/oder der Erdungseinrichtung in Umfangsrichtung um die Eingangswelle in einem Winkelbereich bis zu 270° zu ermöglichen. Diese Lösung ist insbesondere bei bereits montierten Antriebseinheiten mit Erdungseinrichtungen, gebildet aus Erdungsringsegmenten und erforderlichem Austausch der Erdungseinrichtung von Vorteil, wenn beispielsweise im Getriebegehäuse im Erstreckungsbereich der Anordnungsebene der Erdungseinrichtung eine Öffnung vorgesehen ist. Eine aufwendige komplette Demontage der gesamten Antriebseinheit kann dann entfallen.

Die konkrete Ausführung der einzelnen Verbindungen kann vielgestaltig erfolgen. Die kraftschlüssige Verbindung der Erdungseinrichtung oder der Adaptereinrichtung mit dem Getriebegehäuse oder die kraftschlüssige Verbindung der Erdungseinrichtung mit der Adaptereinrichtung ist entsprechend zumindest einer Merkmalskombination aus der nachfolgenden Gruppe oder einer Kombination aus diesen ausgeführt:
- Pressverbindung;
- Schraubverbindung;
- Klemmverbindung.

Die formschlüssige Verbindung der Erdungseinrichtung oder der Adaptereinrichtung mit dem Getriebegehäuse oder die formschlüssige Verbindung der Erdungseinrichtung mit der Adaptereinrichtung ist entsprechend zumindest einer Merkmalskombination aus der nachfolgenden Gruppe oder einer Kombination aus diesen ausgeführt:
- in Umfangsrichtung der Eingangswelle betrachtet einseitig wirkender Formschluss;
- in Umfangsrichtung der Eingangswelle betrachtet beidseitig wirkender Formschluss;
- Klipp- oder Schnappverbindung.

Erdungseinrichtungen sind in vielfältiger Ausbildung aus dem Stand der Technik vorbekannt. Hier kann auf standardisierte Bauteile zurückgegriffen werden, die insbesondere bei Verwendung einer Adaptereinrichtung keine Modifikation am Getriebegehäuse erfordern.

In einer weiteren und mit wenigstens einer der vorgenannten Ausführungen und Ausbildungen kombinierbaren Ausführung ist der getriebeeingangsseitige Gehäusedeckel unter Ausbildung eines Labyrinths zwischen der Lagerumgebung der ersten Lageranordnung und der Eingangswelle und/oder einem mit diesem drehfest verbundenen Element ausgeführt. Dadurch wird ein Übertritt an Schmiermedium in den Bereich der Erdungseinrichtung sicher vermieden.

Die Getriebebaueinheit ist mit einem oder einer Kombination der vorgenannten Merkmale Bestandteil eines Antriebsstranges für ein Fahrzeug, insbesondere ein schienengebundenes Fahrzeug. Die Antriebseinheit umfasst desweiteren eine elektrische Antriebsmaschine mit einem Rotor. Bei eigengelagerten Rotoren ist dieser in der Antriebsmaschine gelagert. Der Abtrieb der Getriebebaueinheit kann vorteilhaft durch eine Getriebeausgangswelle gebildet werden, welche wenigstens ein Antriebsrad oder zwei Antriebsräder unmittelbar trägt. Denkbar ist es auch, weitere Übertragungselemente zwischen dem Abtrieb und den Antriebsrädern vorzusehen oder eine andere Zahl von auf der Ausgangswelle angeordneten Antriebsrädern.

Ein erfindungsgemäß ausgebildeter Antriebsstrang zum Antrieb einer mit zumindest einem Antriebsrad gekoppelten Radantriebswelle oder Radsatzwelle mit einem Fahrwerkrahmen oder Drehgestell, an welchem die Antriebsräder gelagert sind, mit zumindest einer Antriebsmaschine und einer vorbeschriebenen Getriebebaueinheit im Antriebsleistungsfluss zwischen der Antriebsmaschine und den Antriebsrädern sowie einer Erdungseinrichtung zwischen Fahrwerkrahmen oder Drehgestell und der Radantriebs- oder Radsatzwelle ist dadurch gekennzeichnet, dass das Getriebegehäuse mit dem Fahrwerkrahmen oder Drehgestell und/oder der Antriebsmaschine unter Ausbildung zumindest einer leitenden Verbindung elektrisch gekoppelt ist.

Mit der erfindungsgemäß vorgesehenen elektrischen Kopplung von Getriebegehäuse und Drehgestell oder Fahrwerkrahmen und/oder der elektrischen Kopplung von Getriebegehäuse und Antriebsmaschine wird die isolierte Anbindung des Getriebegehäuses an das Drehgestell beziehungsweise Fahrwerkrahmen aufgelöst und die Störströme quasi über eine Strombrücke unter Umgehung der mechanischen Komponenten im Getriebe und Ausnutzung des ohnehin erforderlichen Erdungskontaktes zwischen Drehgestell/Fahrwerkrahmen und Radantriebswelle/Radsatzwelle über Drehgestell/Fahrwerkrahmen abgeleitet. In der erstgenannten Ausführung werden die über die Rotorwelle in die Getriebeeingangswelle eingetragenen Ströme vor der ersten Lagerung in der Getriebebaueinheit in das Getriebegehäuse geleitet und über die elektrische Kopplung mit dem Drehgestell und den ohnehin vorhandenen Erdungskontakt mit der Radantriebs- oder Radsatzwelle abgeleitet. Im zweiten Fall kann die elektrische Antriebsmaschine entweder selbst geerdet sein oder ist über die Anbindung am Drehgestell elektrisch leitend mit diesem gekoppelt, so dass auch in diesem Fall über den Erdungskontakt zwischen Drehgestell/Fahrwerkrahmen ein Ableiten der Störströme möglich ist.

In Ausführungen des Antriebsstranges mit Anordnung einer Kupplungseinrichtung zwischen der Antriebsmaschine und der Getriebebaueinheit, welche zumindest einen antriebseitigen, mit der Rotorwelle der Antriebsmaschine verbundenen Kupplungsteil und einen abtriebseitigen, wenigstens mittelbar mit der Eingangswelle der Getriebebaueinheit verbundenen Kupplungsteil, die miteinander in einem Koppelbereich in Wirkverbindung bringbar sind, umfassen, sind in besonders vorteilhafter Weiterbildung der antrieb- und abtriebseitige Kupplungsteil außerhalb des eigentlichen Koppelbereiches miteinander unter Ausbildung zumindest einer elektrisch leitenden Verbindung elektrisch gekoppelt. Dadurch werden in den antriebseitigen Kupplungsteil eingeleitete Ströme in den abtriebseitigen Kupplungsteil unter Umgehung des Koppelbereiches eingeleitet, d.h. der Koppelbereich beziehungsweise die, die an der Realisierung der Wirkverbindung beteiligten Bereiche der Kupplungsteile werden nicht von Strom durchflossen und somit quasi überbrückt. Die in diesen Bereichen bedingten Schädigungen aufgrund des Stromflusses können somit vermieden werden.

Die elektrisch leitende Verbindung wird von einer Einrichtung zur elektrischen Kopplung gebildet, umfassend zumindest einen elektrischen Leiter, beispielsweise Kabel etc.

In einer Weiterbildung ist die Getriebebaueinheit auf einer Ausgangswelle, die den Abtrieb bildet und die Antriebsräder trägt, gelagert und stützt sich mittels einer Drehmomentstütze am Drehgestell ab. Die elektrische Kopplung zwischen Getriebegehäuse und Drehgestell kann dabei durch die elektrische Kopplung mit der Drehmomentstütze gebildet werden. Die Drehmomentstütze kann als separates Bauteil, beispielsweise als Hebel, ausgeführt sein, das/der einerseits am Getriebe, insbesondere an einem Getriebegehäuse, und andererseits am Drehgestell angeschlossen ist. Dabei ist es von Vorteil, wenn zumindest einer der beiden Anschlüsse über ein elastisches Element realisiert wird, um Schwingungen zu dämpfen. Alternativ oder zusätzlich kann die Drehmomentstütze ein elastisches Element aufweisen, das Schwingungen in der Drehmomentstütze dämpft. In jedem dieser Fälle ist u.U. eine isolierte Anbindung des Getriebegehäuses an das Drehgestell gegeben. Die elektrische Kopplung zwischen Getriebegehäuse und Drehgestell ermöglicht jedoch die gesicherte Einleitung der Ströme in das Drehgestell, unabhängig von der Ausführung der Anbindung.

In einer alternativen Ausführungsform kann die Drehmomentstütze einteilig mit dem Drehgestell oder mit dem Getriebe, insbesondere dem Getriebegehäuse, ausgeführt sein.

Gemäß einer Ausführungsform ist auch der Antriebsmotor im Drehgestell gelagert und vorteilhaft über eine elastische Kupplung, die insbesondere in Axialrichtung und Radialrichtung elastische Bewegungen zulässt, am Antrieb des Getriebes angeschlossen.

Die erfindungsgemäße Lösung wird nachfolgend anhand von Figuren erläutert. Darin ist im Einzelnen folgendes dargestellt:
- Figur 1: zeigt in schematisiert stark vereinfachter Darstellung eine Anordnung einer Erdungseinrichtung in einer Antriebseinheit;
- Figuren 2a bis 2c: zeigen beispielhaft mögliche Ausführungen einer Erdungseinrichtung;
- Figur 3a: zeigt die direkte Anordnung der Erdungseinrichtung am Getriebegehäuse;
- Figur 3b: zeigt beispielhaft eine indirekte Anbindung der Erdungseinrichtung am Getriebegehäuse;
- Figur 4a: zeigt in einer Ansicht von oben in schematisiert vereinfachter Darstellung beispielhaft eine Ausführung eines erfindungsgemäß ausgeführten Antriebsstranges mit den Möglichkeiten zur elektrischen Kopplung;
- Figur 4b: zeigt in einer Ansicht von rechts in schematisiert vereinfachter Darstellung beispielhaft eine Ausführung eines erfindungsgemäß ausgeführten Antriebsstranges mit elektrischer Kopplung zwischen Getriebegehäuse und Drehgestell oder Tragrahmen.

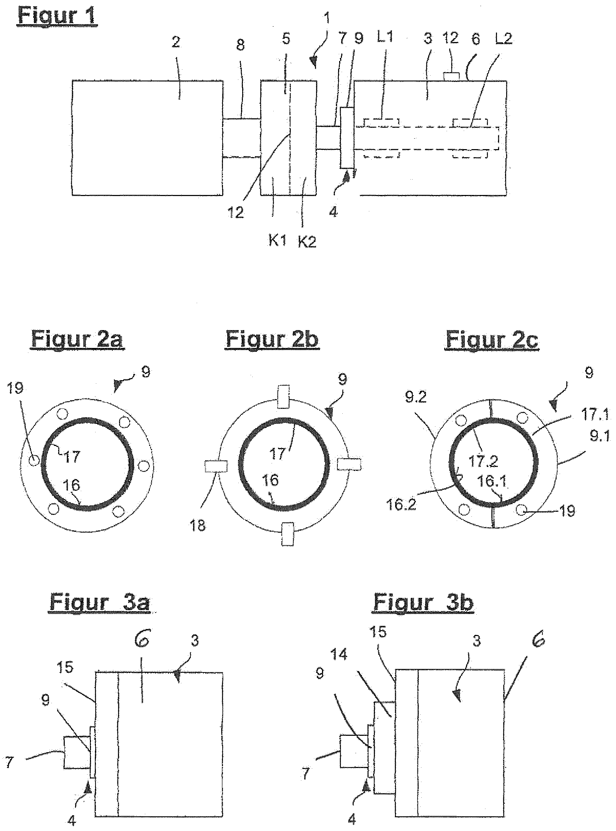

Die Figur 1 zeigt in schematisiert stark vereinfachter Darstellung beispielhaft eine Ausführung einer Antriebseinheit 1, umfassend eine elektrische Antriebsmaschine 2 und eine Getriebebaueinheit 3 mit einer Eingangswelle 7 und zumindest einem hier nicht dargestellten Abtrieb, beispielsweise in Form einer Ausgangswelle, und einer der Eingangswelle 7 erfindungsgemäß zugeordneten Erdungseinrichtung 4. Die Erdungseinrichtung fungiert als Erdungskontakt und ist vorzugsweise als Erdungsringeinheit 9 oder einzelnes Erdungsringsegment ausgeführt. Die elektrische Antriebsmaschine 2 ist als Wechselstrommaschine, beispielsweise Asynchronmaschine ausgeführt. Die Getriebebaueinheit 3 ist mit der Antriebsmaschine 2 wenigstens mittelbar, im dargestellten Fall beispielsweise über eine Kupplungseinrichtung 5 gekoppelt. Die Getriebebaueinheit 3 umfasst ein Getriebegehäuse 6, zumindest eine im Getriebegehäuse 6 über wenigstens eine Lageranordnung L1, hier zwei Lageranordnungen L1 und L2 gelagerte und mit der elektrischen Antriebsmaschine 2 koppelbare Eingangswelle 7. Die Eingangswelle 7 stützt sich in Kraftflussrichtung von der Antriebsmaschine 2 zur Getriebebaueinheit 3 betrachtet eingangsseitig über die Lageranordnung L1 und mit ihrem von der Kopplung mit der Antriebsmaschine 2 abgewandten Endbereich über die Lageranordnung L2 wenigstens mittelbar am Getriebegehäuse 6, d.h. direkt oder über mit diesem ortsfest verbundene Bauelemente ab. Die Rotorwelle 8 der elektrischen Antriebsmaschine 2 ist über die Kupplungseinrichtung 5 mit der Eingangswelle 7 verbunden. Die Verbindung kann je nach Ausführung der Eingangswelle 7 und der Rotorwelle 8 in Richtung parallel zur Drehachse R der Eingangswelle 7 betrachtet außerhalb des Getriebegehäuses 6 oder wie hier nicht dargestellt, innerhalb des Getriebegehäuses 6 erfolgen. Die Getriebebaueinheit 3 umfasst ferner zumindest einen in Figur 1 nicht dargestellten Abtrieb.

Zum Schutz der Lageranordnungen L1 und L2 in der Getriebebaueinheit 3 ist die Erdungseinrichtung 4, umfassend eine die Eingangswelle 7 oder ein drehfest mit dieser verbundenes Bauteil wenigstens über einen Teilbereich in Umfangsrichtung umschließende und wenigstens mittelbar mit dem Getriebegehäuse 6 verbundene Erdungsringeinheit 9, vorgesehen, die auf der Eingangsseite für die Eingangswelle 7 in das Getriebegehäuse 6 koaxial zur Eingangswelle 7 diese über wenigstens einen Teilbereich in Umfangsrichtung umschließend in Kraftflussrichtung vor der ersten Lageranordnung L1 angeordnet ist. Die Rotorwelle 8 der elektrischen Antriebsmaschine 2 ist in diesem Fall beidseitig im Gehäuse der elektrischen Antriebsmaschine 2 gelagert.

Im antriebseitigen Endbereich ist die Rotorwelle 8 mit der Eingangswelle 7 der Getriebebaueinheit 3 wenigstens mittelbar, hier über eine Kupplungseinrichtung 5 gekoppelt. Dazu ist die Rotorwelle 8 im antriebseitigen Endbereich mit einem Kupplungsteil K1 drehfest verbunden, welches wenigstens mittelbar, vorzugsweise direkt mit einem, mit der Eingangswelle 7 drehfest verbundenen Kupplungsteil K2 und einem Koppelbereich in Wirkverbindung steht. Die Erdungseinrichtung 4 ist in axialer Richtung parallel zur Drehachse der Eingangswelle 7 betrachtet zwischen dem mit diesem verbundenen Kupplungsteil K2 und der ersten Lageranordnung L1 in Kraftflussrichtung im Getriebe angeordnet. Vorzugsweise ist diese am Getriebegehäuse 6 befestigt. Die Befestigung am Getriebegehäuse 6 erfolgt vorzugsweise ortsfest.

In der in Figur 1 dargestellten Ausführung ist die durch die Kupplungseinrichtung 5 definierte Kopplungsebene zwischen Rotorwelle 8 und Eingangswelle 7 örtlich vor der ersten Lageranordnung L1 angeordnet. Denkbar ist es aber auch, die Kopplungsebene örtlich in Längsrichtung der Drehachse R der Eingangswelle 7 betrachtet, hinter der ersten Lageranordnung L1 anzuordnen. In diesem Fall ist die Erdungseinrichtung 4 trotzdem in Kraftflussrichtung vor der Lageranordnung 1 angeordnet.

Die Kupplungseinrichtung 5 kann als starre oder elastische Kupplung, vorzugsweise Metallkupplung ausgeführt sein.

Die als Erdungskontakt wirkende Erdungseinrichtung 4 dient der Ableitung der aufgrund frequenzveränderlicher Steuerungen an der elektrischen Antriebsmaschine induzierten elektrischen Spannungen bedingten Ströme, die über die Rotorwelle 8 und bei Ausführung der Kupplung 5 zwischen Rotorwelle 8 und Eingangswelle 7 als Metallkupplung in die Getriebebaueinheit 3 eingetragen werden, vor der ersten Lageranordnung L1 in das Getriebegehäuse 6. Verwendet werden können starre als auch kardanische Kupplungen. Zur Ableitung der Störströme ist entweder das Getriebegehäuse selbst geerdet, oder mit einer, die Ströme weiterleitenden und/oder geerdeten Komponente, elektrisch leitend verbunden. Dazu sind dem Getriebegehäuse 6 Mittel 12 zum Anschluss einer Einrichtung zur elektrischen Kopplung mit einer räumlich von diesem beabstandet angeordneten Komponente zugeordnet, vorzugsweise an diesem angeordnet. Die Mittel 12 können integral mit dem Getriebegehäuse 6 ausgeführt sein oder aber als separate Elemente ausgeführt sein, die lösbar oder unlösbar mit dem Getriebegehäuse 6 verbunden sind. Beispielhaft umfassen diese Klemmen oder Stecker ausgeführt, die mit entsprechend ausgeführten Verbindungselementen an der Einrichtung zur elektrischen Kopplung zusammenwirken. Die Einrichtung ist im einfachsten Fall als elektrischer Leiter in Form eines Kabels ausgeführt.

Bei einer hier nicht dargestellten Ausführung mit an das Getriebegehäuse angeflanschter Antriebsmaschine 2 könnte im Gegensatz dazu die Einleitung direkt in das Gehäuse 10 der Antriebsmaschine 2 aufgrund der konstruktiven Anbindung des Getriebegehäuses an das Gehäuse der Antriebsmaschine 2 erfolgen.

Die Figuren 2a bis 2c verdeutlichen beispielhaft mögliche Ausführungen einer Erdungseinrichtung 4, insbesondere einer Erdungsringeinheit 9. Diese besteht gemäß den Figuren 2a und 2b aus einem ringförmigen metallischen Element, welches am Innenumfang 16 derart ausgeführt ist, eine Halteeinrichtung für Bürsten 17 zu bilden. Vorzugsweise ist das ringförmige Element aus Aluminium ausgeführt. Der Innendurchmesser des ringförmigen Elementes und die Länge der Bürsten 17 sind dazu derart gewählt, dass die Erdungseinrichtung 4 in Einbaulage einen zuverlässigen Kontakt zwischen den Bürsten 17 und der Eingangswelle 7 beziehungsweise einem drehfest mit dieser verbundenen Bauteil ermöglicht. Die Erdungseinrichtung 4 umfasst ferner Mittel zur Realisierung einer zumindest mittelbaren Verbindung mit dem Getriebegehäuse 6. Diese können vielgestaltig ausgeführt sein. Im einfachsten Fall gemäß Figur 2a sind lediglich Durchgangsöffnungen 19, die sich durch die Erdungseinrichtung 4 erstrecken, vorgesehen. Diese sind entweder mit fest definierten oder frei wählbaren, konstantem oder verändertem Abstand zueinander in Umfangsrichtung der Erdungseinrichtung 4 angeordnet. Durch diese können Befestigungselemente zur Kopplung mit dem Getriebegehäuse 6 oder einem mit diesem verbundenen Bauteil geführt werden. In einer alternativen Ausführung kann die Durchgangsöffnung 19 auch mit einem Gewinde versehen sein.

Die Figur 2b zeigt eine Ausbildung einer Erdungseinrichtung 4 mit sich in radialer Richtung von diesem erstreckend angeordneten Vorsprüngen 18, die entweder als Formschlusselemente selbst Bestandteil einer Verbindung sein können oder aber als Anordnungsbereiche für die Durchgangsöffnungen oder Gewindebohrungen fungieren. In einer weiteren hier nicht dargestellten Ausbildung können separate Halteklammern vorgesehen werden, die an den Anschlussbauteilen für die Erdungseinrichtung 4 fixiert, insbesondere befestigbar sind und mit dem ringförmigen Element der Erdungseinrichtung 4 formschlüssig oder kraftschlüssig zusammenwirken.

Zeigen die Figuren 2a und 2b Beispiele für in Umfangsrichtung geschlossene Ausbildungen der Erdungseinrichtung 4 als Erdungsringeinheit 9, verdeutlicht Figur 2c eine Ausbildung mit einer zumindest zweigeteilt ausgeführten Erdungseinrichtung 4. Diese umfasst zwei Erdungsringsegmente 9.1 und 9.2, die in Analogie zur ringförmig ausgeführten und in Umfangsrichtung geschlossenen Erdungsringeinheit 9 aufgebaut sind. Diese weisen an der in Einbaulage in Umfangsrichtung um die Eingangswelle 7 oder um einen radialen Außenumfangsbereich eines drehfest mit dieser verbundenen Bauteils verlaufenden und zu diesem weisenden Innenumfangsbereich 16.1, 16.2 auf, an welchen jeweils Bürsten 17.1, 17.2 angeordnet sind. Die einzelnen Erdungsringsegmente 9.1, 9.2 sind in Umfangsrichtung benachbart zueinander unter Ausbildung einer Trennfuge.

Jedes der einzelnen Erdungsringsegmente 9.1, 9.2 weist eigene Mittel zur Realisierung von Verbindungen mit Anschlussteilen auf, im dargestellten Fall beispielhaft ebenfalls in Form von Durchgangsöffnungen 19.

Nicht dargestellt in den Figuren 2a bis 2c ist eine Ausbildung einer Erdungseinrichtung 4 mit Eignung zum Einpressen in einen Bestandteil des Getriebegehäuses 6. Die zur Realisierung der Pressverbindung vorgesehene Fläche kann dazu beispielhaft vom Außenumfang der Erdungseinrichtung 4 gebildet werden.

Ebenfalls nicht dargestellt ist eine Ausführung mit nur einem Erdungsringsegment.

Die in den Figuren 2a bis 2c dargestellten Ausführungen sind beispielhaft und der Einsatz von Erdungseinrichtungen 4 ist nicht auf diese beschränkt.

Die Figuren 3a und 3b zeigen mögliche Anordnungen einer Erdungseinrichtung 4 am Getriebegehäuse 6. Gemäß Figur 3a erfolgt die Anordnung der Erdungseinrichtung 4 direkt am Getriebegehäuse 6, insbesondere einem Gehäusedeckel 15. Der Gehäusedeckel 15 dient der Durchführung der Eingangswelle 7. Denkbar wäre auch eine Anordnung an einem Wandbereich des Getriebegehäuses 6 oder einem mit dem Getriebegehäuse 6 verbundenen Bauteil. An den miteinander zu verbindenden Komponenten - Getriebegehäuse 6 und Erdungseinrichtung 4 - sind dazu entsprechende Mittel zur Realisierung der Verbindung vorzusehen.

Demgegenüber zeigt die Figur 3b eine alternative Anbindung der Erdungseinrichtung 4 am Getriebegehäuse 6 über eine Adaptereinrichtung 14, die als Halteeinrichtung für die Erdungseinrichtung 4 fungiert. Die Adaptereinrichtung 14 kann unterschiedliche Funktionen übernehmen. Neben der Halte- und Fixierfunktion kann die Adaptereinrichtung 14 auch Lage- und Toleranzausgleichsfunktionen übernehmen.

Im allgemeinen kann die wenigstens mittelbare Verbindung der Erdungseinrichtung 4 mit dem Getriebegehäuse 6 als Verbindung der Erdungseinrichtung 4 mit einem Teilbereich der Wandung des Getriebegehäuses 6 oder einem Gehäusedeckel 15 oder einem mit dem Getriebegehäuse 6 verbundenen Bauteil realisiert werden, wobei die Verbindung mit dem zumindest einem Bauteil der vorgenannten Gruppe entweder direkt oder indirekt über eine Adaptereinrichtung 14 ausgeführt ist. Die einzelnen Verbindungen können kraft- und/oder formschlüssig ausgeführt werden

Die Anordnung der Erdungseinrichtung 4 ist für jede Art von Antriebseinheiten 1 mit elektrischer Antriebsmaschine 2 und Getriebebaueinheit 3 mit sich in der Getriebebaueinheit 3 abstützender Rotorwelle 8 einsetzbar. Die Antriebseinheit 1 kann dazu einen oder mehrere Abtriebe umfassen, die koaxial, parallel oder in einem Winkel zur Eingangswelle 7 angeordnet sein können. Bezüglich der Ausbildung der Getriebebaueinheit 3, insbesondere der einzelnen Drehmoment-/Drehzahlwandlungseinrichtungen besteht keine Restriktion. Bei diesen kann es sich beispielsweise um ein- oder mehrstufige, Zahn- oder Kegelradausführungen handeln.

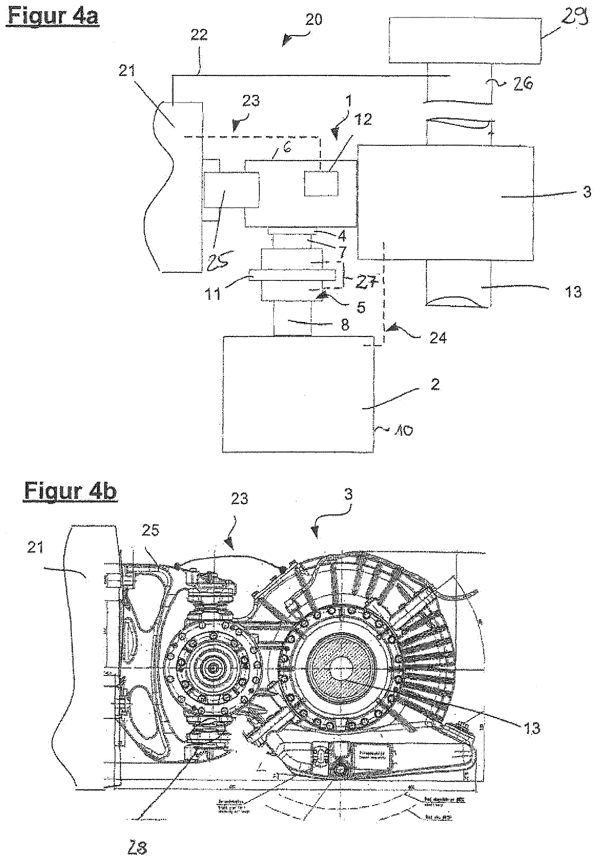

Die Figur 4a zeigt in schematisiert vereinfachter Darstellung in einer Ansicht von oben eine Integration einer Antriebseinheit 1 mit einer elektrischen Antriebsmaschine 2, einer Getriebebaueinheit 3 und einem Erdungskontakt 4 zwischen Getriebegehäuse 6 und Eingangswelle 7 oder einem drehfest mit diesem verbundenen Bauteil, wie beispielhaft in Figur 1 beschrieben, in einem Antriebsstrang 20 zum Antrieb einer mit zumindest einem Antriebsrad R, gekoppelten Welle, hier der Radsatzwelle 26. Die Antriebsräder 29 sind an einem Drehgestell 21 gelagert. Die Getriebebaueinheit 3 ist im Antriebsleistungsfluss zwischen der Antriebsmaschine 2 und den Antriebsrädern 29 angeordnet. Zwischen dem Drehgestell 21 und der Radantriebs- oder Radsatzwelle ist eine Erdungseinrichtung 22 vorgesehen. Zur Ableitung der in das Getriebegehäuse 6 eingeleiteten Störströme ist das Getriebegehäuse 6 mit dem Drehgestell 21 und/oder der Antriebsmaschine 2, insbesondere deren Gehäuse 10 unter Ausbildung zumindest einer elektrisch leitenden Verbindung 23 beziehungsweise 24 elektrisch gekoppelt.

In einer vorteilhaften Weiterbildung ist bei Ausführung der Verbindung zwischen Rotorwelle 8 und Eingangswelle 7 über eine Kupplungseinrichtung 5 der Koppelbereich zwischen einem antriebseitigen, mit der Rotorwelle der Antriebsmaschine verbundenen Kupplungsteil K1 und einen abtriebseitigen, wenigstens mittelbar mit der Eingangswelle 7 der Getriebebaueinheit 3 verbundenen Kupplungsteil K2, der antrieb- und abtriebseitige Kupplungsteil außerhalb des Koppelbereiches 11 miteinander unter Ausbildung zumindest einer elektrisch leitenden Verbindung 27 elektrisch gekoppelt.
Die elektrischen Kopplungen 23, 24 zum Ableiten der in das Getriebegehäuse eingeleiteten Störströme mittels unterbrochener Linie in schematisiert vereinfachter Darstellung wiedergegeben. Die optional zusätzliche elektrische Kopplung 27 zum Schutz der drehmomentübertragenden Bauteile der Kupplungseinrichtung 5 ist ebenfalls mittels unterbrochener Linie schematisiert vereinfacht wiedergegeben.

Die Figur 4b zeigt beispielhaft einen Ausschnitt aus einem Antriebsstrang 20 gemäß Figur 4a in einer möglichen konstruktiven Ausführung in einer Ansicht auf den mit der Eingangswelle 7 der Getriebebaueinheit 3 gekoppelten Kupplungsteil K2. Erkennbar ist hier die Anbindung der Getriebebaueinheit 3 über eine Drehmomentstütze 25 an das Drehgestell 21. Die Drehmomentstütze 25 ist im dargestellten Fall als separates Bauteil ausgeführt, das einerseits am Getriebegehäuse und andererseits am Drehgestell 21 angeschlossen ist, wobei zur Dämpfung von Schwingungen zumindest einer der Anschlüsse über ein elastisches Element 28 erfolgt. Die elektrischen Kopplung 23 zwischen Getriebebaueinheit 3, insbesondere Getriebegehäuse und Drehgestell 21 erfolgt hier über die elektrische Kopplung zwischen Getriebegehäuse und Drehgestell 21.

### Bezugszeichenliste

- 1: Antriebseinheit
- 2: Antriebsmaschine
- 3: Getriebebaueinheit
- 4: Erdungseinrichtung
- 5: Kupplungseinrichtung
- 6: Getriebegehäuse
- 7: Eingangswelle
- 8: Rotorwelle
- 9: Erdungsringeinheit
- 9.1, 9.2: Erdungsringsegmente
- 10: Gehäuse der Antriebsmaschine
- 11: Wirkverbindungsbereich
- 12: Anschlussmittel
- 13: Abtrieb
- 14: Adaptereinrichtung
- 15: Gehäusedeckel
- 16: Innenumfang
- 17: Bürsten
- 18: Vorsprünge
- 19: Durchgangsöffnungen
- 20: Antriebsstrang
- 21: Drehgestell
- 22: Erdungseinrichtung
- 23: elektrische Kopplung
- 24: elektrische Kopplung
- 25: Drehmomentstütze
- 26: Radsatzwelle
- 27: elektrische Kopplung
- 28: elastisches Element
- 29: Rad

## Patentansprüche

1. Antriebsstrang (20) zum Antrieb einer mit zumindest einem Antriebsrad (R) gekoppelten Radantriebswelle oder Radsatzwelle (26);
- mit einem Fahrwerkrahmen oder Drehgestell (21), an welchem das zumindest eine Antriebsrad (R)/die Antriebsräder (R) gelagert sind;
- mit zumindest einer elektrischen Antriebsmaschine (2);
- mit einer Getriebebaueinheit (3) im Antriebsleistungsfluss zwischen der Antriebsmaschine (2) und den Antriebsrädern (29);
- mit einer Erdungseinrichtung (22) zwischen Fahrwerkrahmen oder Drehgestell (21) und der Radantriebs- oder Radsatzwelle (26);
wobei die Getriebebaueinheit (3), mit
- einem Getriebegehäuse (6);
- einer im Getriebegehäuse (6) über wenigstens eine Lageranordnung (L1, L2) gelagerten und mit einer elektrischen Antriebsmaschine (2) koppelbaren Eingangswelle (7) und zumindest einem Abtrieb (13);
- einer der Eingangswelle (7) zugeordneten und wenigstens mittelbar mit dem Getriebegehäuse (6) verbundenen Erdungseinrichtung (4) zur Übertragung von Strömen zwischen der Eingangswelle und dem Getriebegehäuse ausgeführt ist;
wobei die Erdungseinrichtung (4) auf der Eingangsseite der Eingangswelle (7) in das Getriebegehäuse (6) in Kraftflussrichtung von der Antriebsmaschine (2) zum Abtrieb (13) der Getriebebaueinheit (3) betrachtet vor der ersten Lageranordnung (L1) angeordnet ist;
wobei am Getriebegehäuse (6) Mittel (12) angeordnet sind zum Anschluss einer Einrichtung zur elektrischen Kopplung an einer räumlich von diesem beabstandeten Komponente;
und wobei das Getriebegehäuse (6) mit dem Fahrwerkrahmen oder dem Drehgestell (21) unter Ausbildung zumindest einer elektrisch leitenden Verbindung (24) elektrisch gekoppelt ist.

2. Antriebsstrang (20) nach Anspruch 1,
**dadurch gekennzeichnet,**
**dass** die Erdungseinrichtung (4) zumindest ein Bauteil aus der nachfolgenden Gruppe umfasst:
- ein sich über wenigstens einen Teilbereich des Außenumfanges der Eingangswelle (7) oder eines drehfest mit dieser verbundenen Bauteiles in Umfangsrichtung, insbesondere einen Winkel von bis zu 180° erstreckendes Erdungsringsegment (9.1, 9.2);
-- eine Erdungsringeinheit (9), gebildet aus einem in Umfangsrichtung geschlossenen ausgeführten Erdungsring (9) oder zumindest zwei in Umfangsrichtung unter Ausbildung einer Trennfuge benachbart angeordneten Erdungsringsegmenten (9.1, 9.2).

3. Antriebsstrang (20) nach einem der vorhergehenden Ansprüche,
**dadurch gekennzeichnet,**
**dass** die wenigstens mittelbare Verbindung der Erdungseinrichtung (4) mit dem Getriebegehäuse (6) als Verbindung der Erdungseinrichtung (4) mit zumindest einem Bauteil aus der nachfolgenden Gruppe oder einer Kombination aus diesen ausgeführt ist:
- einem Teilbereich der Wandung (35) des Getriebegehäuses (6);
-- einem Gehäusedeckel (15);
- einem mit dem Getriebegehäuse (6) verbundenen Bauteil;
wobei die Verbindung mit dem zumindest einem Bauteil der vorgenannten Gruppe entweder direkt oder indirekt über eine Adaptereinrichtung (14) ausgeführt ist.

4. Antriebsstrang (20) nach Anspruch 3,
**dadurch gekennzeichnet,**
**dass** die Verbindung zwischen der Erdungseinrichtung (4) und dem Getriebegehäuse (6) oder der Adaptereinrichtung (14) und/oder die Verbindung der Adaptereinrichtung (14) mit dem Getriebegehäuse (6) derart ausgeführt ist, dass die Erdungseinrichtung (4) und/oder zumindest ein Teil der Adaptereinrichtung (14) relativ zum Getriebegehäuse (6) in axialer Richtung verschiebbar sind.

5. Antriebsstrang (20) nach Anspruch 3,
**dadurch gekennzeichnet,**
**dass** zumindest eine Verbindung zweier Bauteile aus der Gruppe nachfolgend genannter Verbindungen
- Verbindung zwischen Getriebegehäuse (6) und Adaptereinrichtung (14);
- Verbindung zwischen Adaptereinrichtung (14) und Erdungseinrichtung (4);
- Verbindung zwischen Erdungseinrichtung (4) und Getriebegehäuse (6);
derart ausgeführt ist, geeignet zu sein, in einer ersten Funktionsstellung der beiden miteinander zu verbindenden Bauteile zueinander eine ortsfeste Verbindung zwischen diesen zu erzeugen und nach Lösen der ortsfesten Verbindung eine Relativbewegung der Adaptereinrichtung (14) und/oder der Erdungseinrichtung (4) in Umfangsrichtung um die Eingangswelle (7) in einem Winkelbereich bis zu 270° zu ermöglichen.

6. Antriebsstrang (20) nach Anspruch 3,
**dadurch gekennzeichnet,**
**dass** der Gehäusedeckel (15) als Labyrinthdeckel unter Ausbildung eines Labyrinths zwischen der Lagerumgebung der ersten Lageranordnung (L1) und der Eingangswelle (7) und/oder einem mit diesem drehfest verbundenen Bauteil ausgeführt ist.

7. Antriebsstrang (20) nach einem der vorhergehenden Ansprüche **dadurch gekennzeichnet,**
**dass** das Getriebegehäuse mit der Antriebsmaschine (2) unter Ausbildung zumindest einer elektrisch leitenden Verbindung (24) elektrisch gekoppelt ist.

8. Antriebsstrang (20) nach einem der vorhergehenden Ansprüche,
**dadurch gekennzeichnet,**
**dass** zwischen der elektrischen Antriebsmaschine (2) und der Getriebebaueinheit (3) eine Kupplungseinrichtung (5) angeordnet ist, umfassend zumindest einem antriebseitigen, mit der Rotorwelle (8) der Antriebsmaschine (2) verbundenen Kupplungsteil (K1) und einen abtriebseitigen, wenigstens mittelbar mit der Eingangswelle (7) der Getriebebaueinheit (3) verbundenen Kupplungsteil (K2), die miteinander in einem Koppelbereich (11) in Wirkverbindung bringbar sind und
der antrieb- und abtriebseitige Kupplungsteil (K1, K2) außerhalb des Koppelbereiches (11) miteinander unter Ausbildung zumindest einer elektrisch leitenden Verbindung (27) elektrisch gekoppelt sind.

9. Antriebsstrang (20) nach einem der vorhergehenden Ansprüche,
**dadurch gekennzeichnet,**
**dass** die einzelne elektrisch leitende Verbindung (23, 24, 27) von einer Einrichtung zur elektrischen Kopplung gebildet wird, umfassend zumindest einen elektrischen Leiter.

10. Antriebsstrang (20) nach einem der vorhergehenden Ansprüche,
**dadurch gekennzeichnet,**
**dass** die Getriebebaueinheit (3) auf einer Ausgangswelle, die den Abtrieb (13) bildet und die Antriebsräder (29) trägt, gelagert ist und sich mittels einer Drehmomentstütze (25) an dem Drehgestell (21) abstützt, wobei eine elektrische Kopplung (23) zwischen Getriebegehäuse und Drehgestell (21) durch die elektrische Kopplung (23) zwischen Getriebegehäuse und Drehmomentstütze (25) gebildet wird.

11. Antriebsstrang (20) nach einem der vorhergehenden Ansprüche,
**dadurch gekennzeichnet,**
**dass** die elektrische Antriebsmaschine (2) am Drehgestell (21) gelagert ist.

## Claims

1. Drive train (20) for driving a wheel drive shaft or wheel set shaft (26) coupled to at least one drive wheel (R);
- having a chassis frame or bogie (21), on which the at least one drive wheel (R)/the drive wheels (R) are mounted;
- having at least one electric drive machine (2);
- having a transmission unit (3) in the drive power flux between the drive machine (2) and the drive wheels (29);
- having a grounding device (22) between chassis frame or bogie (21) and the wheel drive shaft or wheel set shaft (26);
wherein the transmission unit (3) is formed with
- a transmission housing (6);
- an input shaft (7), which is mounted in the transmission housing (6) via at least one bearing arrangement (L1, L2) and can be coupled to an electrical drive machine (2), and at least one output (13);
- a grounding device (4), which is assigned to the input shaft (7) and is connected at least indirectly to the transmission housing (6), for transmitting currents between the input shaft and the transmission housing;
wherein the grounding device (4) is arranged upstream of the first bearing arrangement (L1) on the input side of the input shaft (7) into the transmission housing (6) in the force flux direction, as viewed from the drive machine (2) to the output (13) of the transmission unit (3); wherein means (12) are arranged on the transmission housing (6) for connecting a device for the electrical coupling to a component spaced apart spatially from said transmission housing;
and wherein the transmission housing (6) is electrically coupled to the chassis frame or to the bogie (21) to form at least one electrically conductive connection (24).

2. Drive train (20) according to Claim 1,
**characterized**
**in that** the grounding device (4) comprises at least one component from the following group:
- a grounding ring segment (9.1, 9.2) extending over at least a partial region of the outer circumference of the input shaft (7) or of a component, which is connected to the latter for rotation therewith, in the circumferential direction, in particular over an angle of up to 180°;
-- a grounding ring unit (9), formed from a grounding ring (9) which is closed in the circumferential direction, or at least two grounding ring segments (9.1, 9.2) arranged adjacent to one another in the circumferential direction to form a separating gap.

3. Drive train (20) according to either of the preceding claims,
**characterized**
**in that** the at least indirect connection of the grounding device (4) to the transmission housing (6) is designed as a connection of the grounding device (4) to at least one component from the following group or to a combination of the following:
- a partial region of the wall (35) of the transmission housing (6);
-- a housing cover (15);
- a component which is connected to the transmission housing (6);
wherein the connection to the at least one component of the aforementioned group is formed either directly or indirectly via an adapter device (14).

4. Drive train (20) according to Claim 3,
**characterized**
**in that** the connection between the grounding device (4) and the transmission housing (6) or the adapter device (14), and/or the connection of the adapter device (14) to the transmission housing (6), is designed in such a manner that the grounding device (4) and/or at least part of the adapter device (14) are/is displaceable in the axial direction relative to the transmission housing (6).

5. Drive train (20) according to Claim 3,
**characterized**
**in that** at least one connection of two components from the group of connections mentioned below
- connection between transmission housing (6) and adapter device (14);
- connection between adapter device (14) and grounding device (4);
- connection between grounding device (4) and transmission housing (6);
is designed so as to be suitable, in a first functional position of the two components to be connected to each other, to produce a positionally fixed connection between said components, and, after the positionally fixed connection is released, to permit a relative movement of the adapter device (14) and/or of the grounding device (4) in the circumferential direction about the input shaft (7) in an angular range of up to 270°.

6. Drive train (20) according to Claim 3,
**characterized**
**in that** the housing cover (15) is designed as a labyrinth cover to form a labyrinth between the bearing surroundings of the first bearing arrangement (L1) and the input shaft (7) and/or a component connected to said housing cover for rotation therewith.

7. Drive train (20) according to one of the preceding claims, **characterized**
**in that** the transmission housing is electrically coupled to the drive machine (2) to form at least one electrically conductive connection (24).

8. Drive train (20) according to one of the preceding claims,
**characterized**
**in that** a coupling device (5) is arranged between the electrical drive machine (2) and the transmission unit (3), comprising at least one drive-side coupling part (K1), which is connected to the rotor shaft (8) of the drive machine (2), and an output-side coupling part (K2), which is connected at least indirectly to the input shaft (7) of the transmission unit (3), said coupling parts being able to be brought into operative connection with one another in a coupling region (11), and the drive-side and output-side coupling parts (K1, K2) are electrically coupled to one another outside the coupling region (11) to form at least one electrically conductive connection (27).

9. Drive train (20) according to one of the preceding claims,
**characterized**
**in that** the individual electrically conductive connection (23, 24, 27) is formed by a device for the electrical coupling, comprising at least one electrical conductor.

10. Drive train (20) according to one of the preceding claims,
**characterized**
**in that** the transmission unit (3) is mounted on an output shaft, which forms the output (13) and bears the drive wheels (29), and is supported on the bogie (21) by means of a torque support (25), wherein an electrical coupling (23) between transmission housing and bogie (21) is formed by the electrical coupling (23) between transmission housing and torque support (25).

11. Drain train (20) according to one of the preceding claims,
**characterized**
**in that** the electrical drive machine (2) is mounted on the bogie (21).

## Revendications

1. Chaîne cinématique (20) pour l'entraînement d'un arbre d'entraînement de roue ou d'un arbre de train de roues (26) accouplé à au moins une roue d'entraînement (R) ; comprenant
- un châssis de train de roulement ou un bogie (21) sur lequel sont supportées l'au moins une roue d'entraînement (R)/les roues d'entraînement (R) ;
- au moins une machine d'entraînement électrique (2) ;
- une unité de boîte de vitesses (3) en flux de puissance d'entraînement entre la machine d'entraînement (2) et les roues d'entraînement (29) ;
- un système de mise à la terre (22) entre le châssis de train de roulement ou le bogie (21) et l'arbre d'entraînement de roue ou l'arbre de train de roues (26) ;
l'unité de boîte de vitesses (3) étant réalisée avec
- un boîtier de boîte de vitesses (6) ;
- un arbre d'entrée (7) supporté dans le boîtier de boîte de vitesses (6) par le biais d'au moins un agencement de palier (L1, L2) et pouvant être accouplé à une machine d'entraînement électrique (2), et au moins une prise de force (13) ;
- un système de mise à la terre (4) associé à l'arbre d'entrée (7) et connecté au moins indirectement avec le boîtier de boîte de vitesses (6) pour transmettre des courants entre l'arbre d'entrée et le boîtier de boîte de vitesses ;
le système de mise à la terre (4) étant disposé sur le côté d'entrée de l'arbre d'entrée (7) dans le boîtier de boîte de vitesses (6), avant le premier agencement de palier (L1), vu dans la direction du flux de forces depuis la machine d'entraînement (2) jusqu'à la prise de force (13) de l'unité de boîte de vitesses (3) ;
des moyens (12) étant disposés au niveau du boîtier de boîte de vitesses (6) pour le raccordement d'un système d'accouplement électrique à un composant espacé physiquement de celui-ci ;
et le boîtier de boîte de vitesses (6) étant accouplé électriquement au châssis de train de roulement ou au bogie (21) en réalisant au moins une liaison électriquement conductrice (24).

2. Chaîne cinématique (20) selon la revendication 1,
**caractérisée en ce que**
le système de mise à la terre (4) comprend au moins un composant parmi le groupe suivant :
- un segment annulaire de mise à la terre (9.1, 9.2) s'étendant sur au moins une région partielle de la périphérie extérieure de l'arbre d'entrée (7) ou d'un composant connecté de manière solidaire en rotation à celui-ci dans la direction périphérique, en particulier sur un angle allant jusqu'à 180° ;
- une unité annulaire de mise à la terre (9) formée d'une bague de mise à la terre (9) réalisée sous forme fermée dans la direction périphérique ou d'au moins deux segments annulaires de mise à la terre (9.1, 9.2) disposés de manière juxtaposée dans la direction périphérique en formant un joint de séparation.

3. Chaîne cinématique (20) selon l'une quelconque des revendications précédentes,
**caractérisée en ce que**
la connexion au moins indirecte du système de mise à la terre (4) au boîtier de boîte de vitesses (6) est réalisée sous forme de connexion du système de mise à la terre (4) à au moins un composant parmi le groupe suivant ou une combinaison de ceux-ci :
- une région partielle de la paroi (35) du boîtier de boîte de vitesses (6) ;
- un couvercle de boîtier (15) ;
- un composant connecté au boîtier de boîte de vitesses (6) ;
la connexion à l'au moins un composant du groupe susmentionné étant réalisée soit directement soit indirectement par le biais d'un système adaptateur (14) .

4. Chaîne cinématique (20) selon la revendication 3,
**caractérisée en ce que**
la connexion entre le système de mise à la terre (4) et le boîtier de boîte de vitesses (6) ou le système adaptateur (14) et/ou la connexion du système adaptateur (14) au boîtier de boîte de vitesses (6) est réalisée de telle sorte que le système de mise à la terre (4) et/ou au moins une partie du système adaptateur (14) puisse être déplacé(e) dans la direction axiale par rapport au boîtier de boîte de vitesses (6).

5. Chaîne cinématique (20) selon la revendication 3,
**caractérisée en ce**
**qu'**au moins une liaison de deux composants du groupe de liaisons ci-dessous
- liaison entre le boîtier de boîte de vitesses (6) et le système adaptateur (14) ;
- liaison entre le système adaptateur (14) et le système de mise à la terre (4) ;
- liaison entre le système de mise à la terre (4) et le boîtier de boîte de vitesses (6) ;
est réalisée de manière à être appropriée pour générer, dans une première position fonctionnelle l'un par rapport à l'autre des deux composants devant être connectés l'un à l'autre, une liaison fixe entre ceux-ci et, après le desserrage de la liaison fixe, pour permettre un mouvement relatif du système adaptateur (14) et/ou du système de mise à la terre (4) dans la direction périphérique autour de l'arbre d'entrée (7) dans une plage angulaire allant jusqu'à 270°.

6. Chaîne cinématique (20) selon la revendication 3,
**caractérisée en ce que**
le couvercle de boîtier (15) est réalisé sous forme de couvercle en labyrinthe créant un labyrinthe entre l'environnement du palier du premier agencement de palier (L1) et l'arbre d'entrée (7) et/ou un composant connecté de manière solidaire en rotation à celui-ci.

7. Chaîne cinématique (20) selon l'une quelconque des revendications précédentes,
**caractérisée en ce que**
le boîtier de boîte de vitesses est accouplé électriquement à la machine d'entraînement (2) en créant au moins une liaison électriquement conductrice (24).

8. Chaîne cinématique (20) selon l'une quelconque des revendications précédentes,
**caractérisée en ce**
**qu'**entre la machine d'entraînement électrique (2) et l'unité de boîte de vitesses (3) est disposé un système d'accouplement (5) comprenant au moins une partie d'accouplement (K1) du côté de l'entraînement, connectée à l'arbre de rotor (8) de la machine d'entraînement (2), et une partie d'accouplement (K2) du côté de la prise de force, connectée de manière au moins indirecte à l'arbre d'entrée (7) de l'unité de boîte de vitesses (3), lesquelles peuvent être amenées en liaison fonctionnelle l'une avec l'autre dans une région de couplage (11) et
la partie d'accouplement du côté de l'entraînement et du côté de la prise de force (K1, K2) sont accouplées électriquement l'une à l'autre à l'extérieur de la région de couplage (11) en réalisant au moins une liaison électriquement conductrice (27).

9. Chaîne cinématique (20) selon l'une quelconque des revendications précédentes,
**caractérisée en ce que**
la liaison électriquement conductrice individuelle (23, 24, 27) est formée par un système de couplage électrique comprenant au moins un conducteur électrique.

10. Chaîne cinématique (20) selon l'une quelconque des revendications précédentes,
**caractérisée en ce que**
l'unité de boîte de vitesses (3) est supportée sur un arbre de sortie, qui forme la prise de force (13) et qui porte les roues d'entraînement (29), et s'appuie au moyen d'un support de couple (25) sur le bogie (21), un couplage électrique (23) entre le boîtier de boîte de vitesses et le bogie (21) étant formé par le couplage électrique (23) entre le boîtier de boîte de vitesses et le support de couple (25).

11. Chaîne cinématique (20) selon l'une quelconque des revendications précédentes,
**caractérisée en ce que**
la machine d'entraînement électrique (2) est supportée sur le bogie (21).
